# FASCICULE DE BREVET EUROPEEN

(11) **EP 2 922 742 B1**
(45) Date de publication et mention de la délivrance du brevet: **12.09.2018**
(21) Numéro de dépôt: 13794901.2
(22) Date de dépôt: 21.11.2013
(51) Int. Cl.: B62D 25/08

(54) **DISPOSITIF DE RÉCEPTION D'UN ÉLÉMENT DE SUSPENSION D'UN VÉHICULE AUTOMOBILE, AGENCEMENT COMPORTANT DEUX DISPOSITIFS IDENTIQUES, ET PROCÉDÉ DE FABRICATION DE L'AGENCEMENT**
VORRICHTUNG ZUR AUFNAHME EINES MOTORFAHRZEUGAUFHÄNGUNGSELEMENTS, AUSRÜSTUNG MIT ZWEI IDENTISCHEN VORRICHTUNGEN UND VERFAHREN ZUR HERSTELLUNG DER VORRICHTUNG
DEVICE FOR RECEIVING A MOTOR VEHICLE SUSPENSION ELEMENT, EQUIPMENT COMPRISING TWO IDENTICAL DEVICES, AND METHOD FOR MANUFACTURING THE EQUIPMENT

(30) Priorité: 21.11.2012 FR 1261085
(43) Date de publication de la demande: 30.09.2015
(73) Titulaire: Renault S.A.S., 92100 Boulogne-Billancourt (FR)
(72) Inventeur: ROUSSEAU, Olivier, F-91160 Ballainvilliers (FR); BANNIER, Nathalie, F-78860 Saint Nom La Breteche (FR); BEDDOCK, David, F-91300 Massy (FR)
(86) Numéro de dépôt international: PCT/EP2013/074336
(87) Numéro de publication internationale: WO 2014/079908

(56) Documents cités:
- DE-A1-102004 043 339
- DE-A1-102010 009 481

## Description

### Domaine technique de l'invention

L'invention concerne le domaine des véhicules automobiles.

L'invention a pour objet plus particulièrement un dispositif de réception d'un élément de suspension d'un véhicule automobile formé en une pièce monolithique et comportant un système de positionnement configuré de sorte qu'un montage dudit dispositif à un élément de châssis correspondant du véhicule puisse être réalisé indifféremment au niveau d'une zone de suspension avant gauche, ou avant droite, dudit véhicule.

### État de la technique

Les éléments de suspension d'un véhicule sont généralement chacun monté au niveau d'une coupelle fixée au châssis du véhicule. Actuellement, on différencie les coupelles avant droite et avant gauche, ainsi que les coupelles arrière droite et arrière gauche. En effet, chacune adopte une forme bien particulière à son positionnement. Ceci multiplie les références et la gestion des stocks de pièces détachées.

Le brevet français FR2870816 propose un dispositif destiné à recevoir un élément de suspension. Le dispositif est formé de deux pièces indépendantes de sorte que l'assemblage des deux pièces permette le montage du dispositif au niveau d'un élément de suspension arrière droit ou arrière gauche d'un véhicule.

De même, le document DE 10 2004 043339 décrit également un dispositif destiné à recevoir un élément de suspension. Le dispositif est formé en une pièce monolithique et comporte un système de positionnement configuré de sorte qu'un montage dudit dispositif à un élément de châssis correspondant du véhicule puisse être réalisé indifféremment au niveau d'une zone de suspension avant gauche, ou avant droite, dudit véhicule.

Le document DE 10 2010 009481 A1 divulgue le préambule de la revendication 1 et décrit également un agencement pour véhicule automobile comprenant un dispositif destiné à recevoir un élément de suspension.

Ces solutions ne sont pas satisfaisantes car, d'une part, elles peuvent générer des problèmes importants de gestion des stocks et, d'autre part, elles ne permettent pas un montage optimal sur le châssis du véhicule.

### Objet de l'invention

Le but de la présente invention est de proposer une solution qui remédie aux inconvénients listés ci-dessus.

Dans ce but, l'invention a pour objet un agencement pour véhicule automobile comportant une partie avant de châssis munie de deux dispositifs de réception identiques d'un élément de suspension d'un véhicule automobile, chacun monté à un élément de châssis correspondant du véhicule, dans une zone de suspension avant associée du véhicule automobile, chaque dispositif de réception étant formé en une pièce monolithique et comportant un système de positionnement apte à monter le dispositif indifféremment dans 'une zone de suspension avant gauche, ou avant droite, dudit véhicule, le système de positionnement comportant un premier élément d'accouplement destiné à coopérer, au cours du montage, avec un premier organe de montage lorsque le dispositif de réception est configuré de sorte à être disposé dans la zone de suspension avant droite et un deuxième élément d'accouplement destiné à coopérer, au cours du montage, avec un deuxième organe de montage lorsque le dispositif de réception est configuré de sorte à être disposé dans la zone de suspension avant gauche, caractérisé en ce qu'il comporte une partie d'assemblage munie d'un système d'assemblage destiné au montage de l'élément de suspension, et une partie d'accostage au niveau de laquelle est formé le système de positionnement, ladite partie d'accostage étant destinée à coopérer avec l'élément de châssis correspondant, la partie d'accostage comportant une face située dans un plan différent et surélevé d'une face de la partie d'assemblage.

De préférence, les premier et deuxième éléments d'accouplement sont formés chacun par un trou, de préférence débouchant.

Par ailleurs, la partie d'accostage peut comporter une face située dans un plan différent et surélevé d'une face de la partie d'assemblage.

Selon une réalisation le système d'assemblage comporte un trou principal destiné à recevoir un axe de l'élément de suspension, et au moins un trou secondaire allongé de sorte à permettre la fixation de l'élément de suspension tout en permettant un réglage angulaire du positionnement de l'élément de suspension autour de son axe.

Avantageusement, le dispositif présente un axe de symétrie sensiblement perpendiculaire à l'axe de longitudinal du véhicule une fois le dispositif de réception assemblé au reste du châssis dudit véhicule.

L'invention est aussi relative à un procédé de fabrication d'un agencement pour véhicule automobile comportant une partie avant de châssis munie de deux dispositifs de réception identiques d'un élément de suspension d'un véhicule automobile, chacun monté à un élément de châssis correspondant du véhicule, dans une zone de suspension avant associée du véhicule automobile, chaque dispositif de réception étant formé en une pièce monolithique et comportant un système de positionnement apte à monter le dispositif indifféremment dans 'une zone de suspension avant gauche, ou avant droite, dudit véhicule, le système de positionnement comportant un premier élément d'accouplement destiné à coopérer, au cours du montage, avec un premier organe de montage lorsque le dispositif de réception est configuré de sorte à être disposé dans la zone de suspension avant droite et un deuxième élément d'accouplement destiné à coopérer, au cours du montage, avec un deuxième organe de montage lorsque le dispositif de réception est configuré de sorte à être disposé dans la zone de suspension avant gauche, l'agencement comportant une partie d'assemblage munie d'un système d'assemblage destiné au montage de l'élément de suspension, et une partie d'accostage au niveau de laquelle est formé le système de positionnement, ladite partie d'accostage étant destinée à coopérer avec l'élément de châssis correspondant, la partie d'accostage comportant une face située dans un plan différent et surélevé d'une face de la partie d'assemblage, le procédé comportant :
- une première étape d'association d'un premier dispositif de réception à un premier organe de montage dans une zone de suspension avant droite du véhicule,
- une deuxième étape d'association d'un deuxième dispositif de réception à un deuxième organe de montage dans une zone de suspension avant gauche du véhicule.

Par ailleurs, selon une mise en oeuvre du procédé, le système de positionnement de chacun des premier et deuxième dispositifs de réception comportant un premier trou et un deuxième trou, de préférence débouchant, décalés le long d'un axe destiné à être sensiblement parallèle à l'axe longitudinal du véhicule, les première et deuxième étape d'association comportent respectivement la mise en place d'un doigt de montage du premier organe de montage au travers d'au moins une partie du premier trou et la mise en place d'un doigt de montage du deuxième organe de montage au travers d'au moins une partie du deuxième trou.

Avantageusement, le procédé comporte une étape de mise en contact d'un premier élément de châssis avec le premier dispositif de réception et/ou une étape de mise en contact d'un deuxième élément de châssis avec le deuxième dispositif de réception, et il comporte une étape de soudure du premier élément de châssis au premier dispositif de réception et/ou du deuxième élément de châssis au deuxième dispositif de réception.

De préférence, pour chacun des premier et deuxième dispositifs de réception, l'étape de soudure comporte une étape de positionnement d'une partie de pince de soudure correspondante entre l'organe de montage associé et une zone de contact entre le dispositif de réception associé et l'élément de châssis associé.

Enfin le procédé peut aussi comporter une étape de retrait des premier et deuxième organes de montage après assemblage des premier et deuxième dispositifs de réception aux éléments de châssis correspondants.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un dispositif de réception d'un élément de suspension selon l'invention,
- la figure 2 est une vue en perspective d'un châssis équipé de deux dispositifs de réception selon la figure 1,
- la figure 3 est une vue représentative d'une étape de montage de deux dispositifs de réception au châssis,
- la figure 4 illustre une vue en perspective d'un dispositif de réception associé à une partie de châssis,
- la figure 5 illustre une vue en coupe verticale et transversale au châssis de la figure 4,
- la figure 6 illustre une vue en perspective de la figure 5,
- la figure 7 illustre une vue en coupe verticale de la figure 3 et parallèle à un axe longitudinal du châssis,
- la figure 8 illustre une étape de soudure d'un procédé de fabrication d'un agencement intégrant un dispositif de réception de la figure 1.

### Description de modes préférentiels de l'invention

Le dispositif de réception d'un élément de suspension d'un véhicule automobile décrit ci-après adopte une forme lui permettant d'être utilisé, lors du montage dudit véhicule, en partie avant du véhicule indifféremment au niveau d'un amortisseur droit ou d'un amortisseur gauche. Il en résulte qu'une unique référence peut être utilisée.

Le dispositif de réception est aussi connu dans le domaine sous le terme de coupelle.

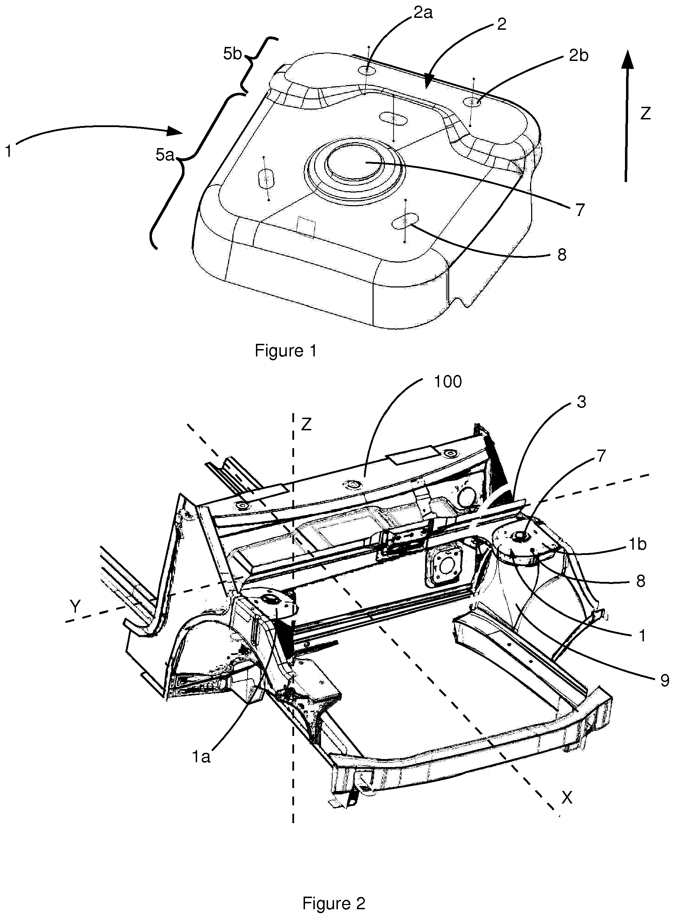

Dans la présente description, un axe selon X représente un axe passant par l'avant et l'arrière d'un véhicule et sensiblement horizontal, un axe selon Y représente un axe transversal au véhicule sensiblement horizontal et sensiblement perpendiculaire à l'axe X, et un axe selon Z est un axe sensiblement vertical (Figure 2).

Par « sensiblement », on entend dans la présente description, de préférence, exactement ou à quelques degrés près (par exemple plus ou moins 5 degrés).

Sur la figure 1, le dispositif de réception 1 d'un élément de suspension d'un véhicule automobile est formé en une pièce monolithique. Ceci lui confère une bonne résistance et permet de diminuer les coûts de production en évitant une étape supplémentaire d'assemblage dudit dispositif de réception 1.

Afin d'être universel, le dispositif 1 comporte un système de positionnement 2 configuré de sorte qu'un montage dudit dispositif à un élément de châssis 3 (figure 2) correspondant du véhicule puisse être réalisé indifféremment au niveau d'une zone de suspension avant gauche, ou avant droite, dudit véhicule.

Par « zone de suspension », on entend un endroit du véhicule destiné à recevoir un élément de suspension associé, comme un amortisseur de roue.

La figure 2 illustre un agencement pour véhicule automobile comportant une partie avant de châssis munie de deux dispositifs de réception 1a, 1b identiques. Chacun des dispositifs de réception 1a, 1b est monté à un élément de châssis 3 correspondant de l'agencement au niveau d'une zone de suspension avant associé du véhicule automobile (zone avant droite ou zone avant gauche).

Selon une mise en oeuvre particulière illustrée aux figures 1 à 3, le système de positionnement 2 comporte un premier élément d'accouplement 2a destiné à coopérer, au cours du montage, avec un premier organe de montage 4a lorsque le dispositif de réception est configuré de sorte à être disposé au niveau de la zone de suspension avant droite et un deuxième élément d'accouplement 2b destiné à coopérer, au cours du montage, avec un deuxième organe de montage 4b lorsque le dispositif de réception 1b est configuré de sorte à être disposé au niveau de la zone de suspension avant gauche.

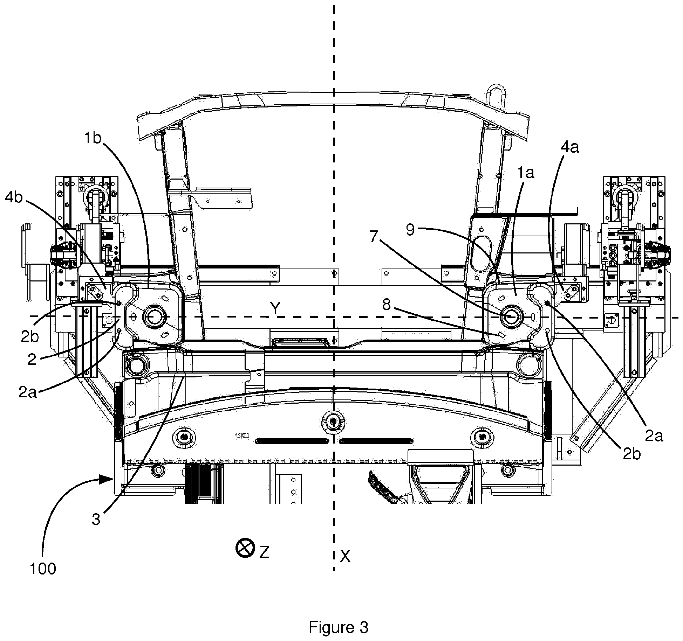

On comprend de la figure 3, que les premier et deuxième organes de montages 4a, 4b sont indépendant du châssis 100 du véhicule et viennent juste supporter le dispositif de réception associé 1a, 1b lors de son intégration au châssis 100 du véhicule. Ces premier et deuxième organes de montage 4a, 4b peuvent faire partie intégrante d'un système de montage présent sur au moins un poste de montage d'une ligne d'assemblage du véhicule automobile. Sur la figure 3, le premier élément d'accouplement 2a d'un des dispositifs 1a est accouplé au premier organe de montage 4a, et le deuxième élément d'accouplement 2b de l'autre dispositif 1b est accouplé au deuxième organe de montage 4b.

Par « droite » ou « gauche », on entend dans la présente description la droite ou la gauche d'un véhicule (et donc du châssis) pour un conducteur assis dans le véhicule au poste de conduite.

Selon une mise en oeuvre, les premier et deuxième éléments d'accouplement 2a, 2b sont formés chacun par un trou, de préférence débouchant tels que visibles à la figure 1. Dès lors, au cours du montage, le premier élément d'accouplement 2a d'un des dispositifs 1a est au moins partiellement pénétré par un doigt de montage du premier organe de montage 4a, et le deuxième élément d'accouplement 2b de l'autre dispositif 1b est au moins partiellement pénétré par un doigt de montage du deuxième organe de montage 4b.

De manière avantageuse, le dispositif de réception 1 de la figure 1 comporte une partie d'assemblage 5a munie d'un système d'assemblage destiné au montage de l'élément de suspension, et une partie d'accostage 5b au niveau de laquelle est formée le système de positionnement 2, ladite partie d'accostage 5b étant destinée à coopérer avec l'élément de châssis correspondant, notamment pour faciliter le positionnement dudit dispositif de réception par rapport à l'élément de châssis 3 associé.

Selon une mise en oeuvre, la partie d'accostage 5b comporte une face située dans un plan différent et surélevé d'une face de la partie d'assemblage 5a. Ce plan est avantageusement normal à l'axe Z et est surélevé par rapport à la partie d'assemblage lorsque le dispositif de réception 1 est monté à l'élément de châssis 3 (figure 2).

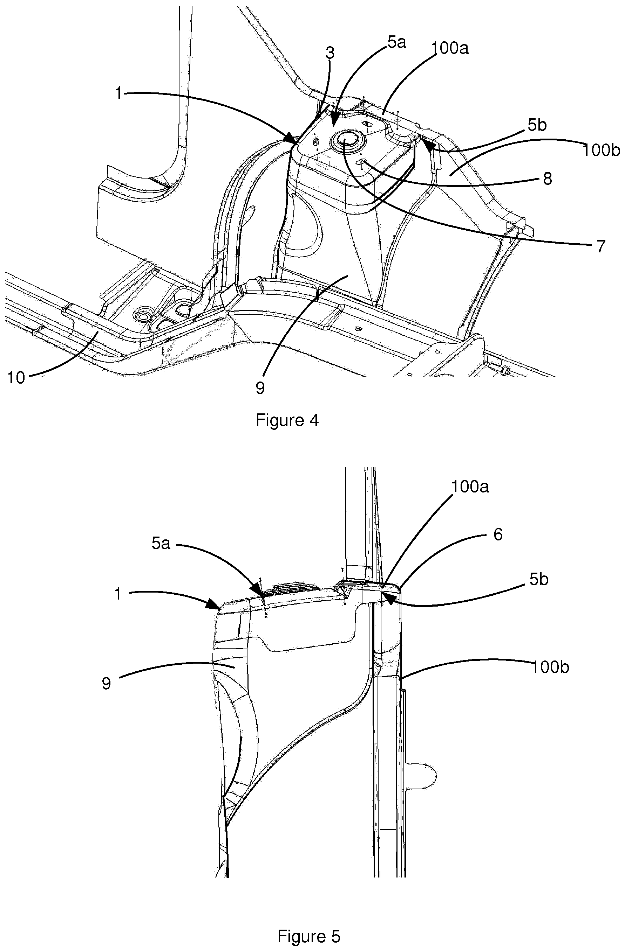

Le montage de chaque dispositif de réception 1 à l'élément de châssis correspondant 3 est visible plus en détail aux figures 4 à 6. Ainsi, la partie d'accostage 5b est configurée de sorte à être au moins partiellement recouverte, par exemple au niveau de sa face surélevée par rapport à la face de la partie d'assemblage 5a, par une portion 100a sensiblement horizontale de châssis 3. De plus, un rebord 6 (non visible à la figure 4) de la partie d'accostage 5b, opposé à la partie d'assemblage 5a, vient en contact avec une portion 100b sensiblement verticale de châssis.

Comme visible aux figures 1, 2, 3 et 4, le système d'assemblage peut comporter un trou principal 7 destiné à recevoir un axe de l'élément de suspension, et au moins un trou secondaire 8 allongé de sorte à permettre la fixation de l'élément de suspension tout en permettant un réglage angulaire du positionnement de l'élément de suspension autour de son axe. Avantageusement, le système d'assemblage comporte au moins trois trous secondaires 8 disposés autour du trou principal 7.

De manière avantageuse, le système d'assemblage présente un axe de symétrie transversal au châssis 3 du véhicule une fois le dispositif de réception 1 incorporé audit châssis 3. Cet axe de symétrie est sensiblement parallèle à l'axe Y du véhicule (figures 2 et 3).

De préférence, le système de positionnement 2 présente aussi un axe de symétrie transversal au châssis 100 du véhicule une fois le dispositif de réception 1 incorporé audit châssis 100.

Par ailleurs, le dispositif de réception 1 peut présenter un axe de symétrie sensiblement perpendiculaire à l'axe longitudinal X du véhicule une fois le dispositif de réception assemblé au reste du châssis 100 dudit véhicule.

Ces symétries permettent le montage dudit dispositif à l'élément de châssis correspondant du véhicule. Le montage peut ainsi être réalisé indifféremment au niveau d'une zone de suspension avant gauche ou avant droite dudit véhicule.

Comme illustré aux figures 2 à 7, chaque dispositif de réception 1 de l'agencement peut être monté sur un élément de rehausse 9. Cet élément de rehausse 9 permet entre autre une répartition des forces de sorte à maintenir le dispositif de réception dans un plan normal à l'axe Z (figures 2 et 3). Pour cela, l'élément de rehausse 9 peut être fixé, par exemple par soudage, au dispositif de réception 1, à la portion 100b de châssis sensiblement verticale et à un longeron longitudinal 10 (figure 4) du châssis. Cette rehausse 9 peut constituer au moins en partie l'élément de châssis 3 visé ci-dessus.

Les portions 100a, 100b de châssis des figures 4 à 6 sont aussi communément appelées doublure de pied. Elles sont généralement installées après avoir solidarisé le dispositif de réception à l'élément de châssis.

Comme sur la figure 2, le châssis 100 peut comporter une cloison de chauffage. La coupelle peut y être fixée ou non en fonction du type de véhicule. La cloison de chauffage sert essentiellement pour la structure du véhicule.

Dans l'agencement (figures 2 et 3), les deux dispositifs de réception 1a, 1b sont, de préférence, symétriques par rapport à un axe longitudinal du châssis passant par l'avant et l'arrière du véhicule. Cet axe longitudinal est sensiblement parallèle à l'axe X. Par ailleurs, les dispositifs de réception 1a, 1b étant identiques, ils sont aussi symétriques par rapport à un axe sensiblement parallèle à l'axe Y du véhicule.

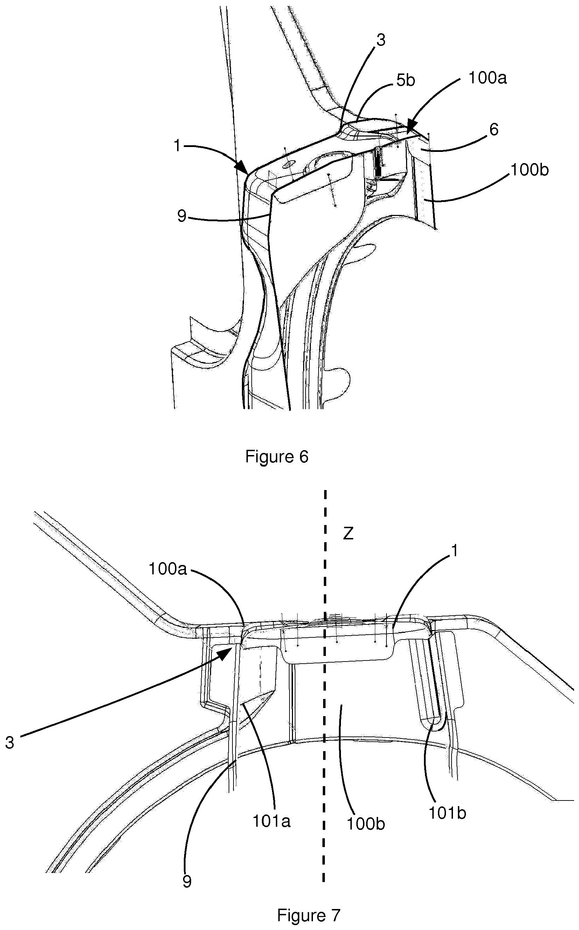

Sur la figure 7, l'agencement est tel que l'élément de châssis 3 peut comporter un logement d'une partie du dispositif de réception 1. Ce logement est au moins en partie délimité par la portion 100a et la portion 100b de châssis ainsi que par deux montants 101a, 101b de la portion 100b de châssis formés par exemple dans la doublure de pied. Ces deux montants 101a, 101b sont d'axes sensiblement parallèles à l'axe Z du véhicule, et sont configurés de sorte que le dispositif de réception 1 soit en contact avec ces montants au niveau de sa partie d'accostage 5b.

Bien entendu, un véhicule automobile peut comporter un agencement tel que décrit précédemment.

On comprend de ce qui a été dit ci-dessus que le dispositif de réception a une forme lui permettant de s'intégrer sans aucune modification aussi bien à droite qu'à gauche en partie avant du véhicule, tout en conservant la symétrie des pièces environnantes comme l'élément de rehausse, la doublure de pied et la cloison de chauffage. Pour cela le dispositif de réception peut comporter des rebords dont les angles sont calculés de manière idoine pour s'adapter à gauche ou à droite.

De manière plus détaillée dans un mode optimisé, le dispositif de réception 1 de la figure 1 comporte dans sa partie d'assemblage 5a une première face destinée à être sensiblement normale à l'axe Z lorsque le dispositif de réception est monté à l'élément de châssis 3. De la même manière, le dispositif comporte dans sa partie d'accostage 5b une seconde face destinée à être sensiblement normale à l'axe Z lorsque le dispositif de réception est monté à l'élément de châssis 3, ladite seconde face étant surélevée par rapport à la première face en position montée au châssis. La première face héberge le système d'assemblage et la seconde face héberge les premier et deuxième éléments d'accouplement. De ces première et seconde faces s'étendent des rebords du dispositif de réception. De préférence, au moins un de ces rebords coopère avec la portion 100b verticale de châssis et la seconde face coopère au moins partiellement avec la portion 100a horizontale de châssis. Selon la réalisation, les rebords ou les parties de rebord ne coopérant pas avec l'élément de châssis 3 coopèrent au moins partiellement avec la rehausse 9 associée.

En outre, le dispositif de réception peut coopérer avec un bloc filtrant de l'élément de suspension.

De préférence, l'élément de suspension est configuré de sorte à pouvoir lui aussi être utilisé à droite ou à gauche.

Un élément de suspension inclut en général un amortisseur combiné à un ressort hélicoïdal. Le dispositif de réception permet de recevoir l'amortisseur qui passe par le trou principal 7 et qui est fixé via chaque trou secondaire 8. Par ailleurs, le ressort est quant à lui solidaire du dispositif de réception par l'interposition d'un bloc filtrant en contact direct avec le dispositif de réception et le ressort. Le ressort est contraint entre le dispositif de réception et un élément annexe fixé à l'amortisseur.

On a compris de ce qui a été dit ci-dessus qu'il résulte un assemblage avantageux de l'agencement tel que décrit. Autrement dit, un procédé de fabrication de l'agencement dans une chaîne de production de véhicule automobile peut comporter (figure 3) : une première étape d'association d'un premier dispositif de réception 1a tel que décrit à un premier organe de montage 4a au niveau d'une zone de suspension avant droite du véhicule ; et une deuxième étape d'association d'un deuxième dispositif de réception 1b à un deuxième organe de montage 4b au niveau d'une zone de suspension avant gauche du véhicule. Bien entendu, les premier et deuxième dispositifs de réception sont identiques. Ces associations sont temporaires le temps d'assembler les dispositifs de réception avec l'élément de châssis correspondant. Un accostage permettant le positionnement idoine avant de solidariser l'assemblage, par exemple par soudure, peut être mise en oeuvre par des formes adaptées et complémentaires d'un dispositif de réception avec son élément de châssis associé.

Avantageusement, le système de positionnement 2 de chacun des premier et deuxième dispositifs de réception 1a, 1b comportant un premier trou et un deuxième trou, de préférence débouchant, de préférence décalés le long d'un axe destiné à être sensiblement parallèle à l'axe longitudinal du véhicule, les première et deuxième étapes d'association comportent respectivement la mise en place d'un doigt de montage du premier organe de montage 4a au travers d'au moins une partie du premier trou 2a et la mise en place d'un doigt de montage du deuxième organe de montage 4b au travers d'au moins une partie du deuxième trou 2b.

Par ailleurs, le procédé peut comporter une étape de mise en contact d'un premier élément de châssis avec le premier dispositif de réception 1a et/ou une étape de mise en contact d'un deuxième élément de châssis avec le deuxième dispositif de réception 1b, et une étape de soudure du premier élément de châssis au premier dispositif de réception et/ou du deuxième élément de châssis au deuxième dispositif de réception. Les premier et deuxième éléments de châssis peuvent être formés par une même pièce représentée par la référence 3 à la figure 3.

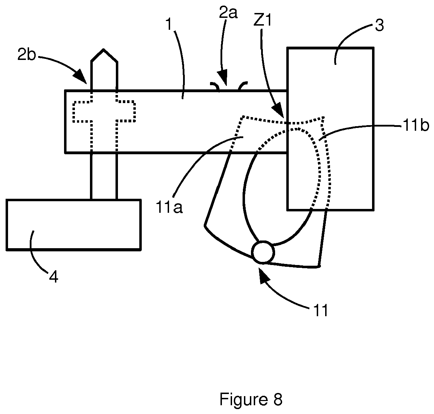

Cette étape de soudure peut être usuellement complexe à mettre en oeuvre, mais est simplifiée grâce au dispositif de réception décrit ci-avant en procurant un espace plus important pour le travail d'un dispositif de soudure, notamment par un choix idoine du trou à utiliser pour l'association du dispositif de réception avec l'organe de montage. Ainsi, à titre d'exemple, pour chacun des premier et deuxième dispositifs de réception 1a, 1b, l'étape de soudure comporte une étape de positionnement (figure 8) d'une partie de pince 11a de soudure correspondante entre l'organe de montage 4 associé et une zone de contact Z1 entre le dispositif de réception 1 associé et l'élément de châssis 3 associé. Sur la figure 8, la partie de pince 11a de soudure est en contact avec le dispositif de réception 1 et une autre partie de pince 11b de soudure est en contact avec l'élément de châssis 3, l'utilisation idoine de la pince 11 pouvant alors permettre la soudure du dispositif de réception 1 avec l'élément de châssis 3 au niveau de la zone Z1. On comprend de cette figure 8 que si l'organe de montage 4 avait été inséré au niveau du trou 2a au lieu du trou 2b, il n'y aurait pas eu assez de place pour laisser passer la pince de soudure.

Le procédé comporte avantageusement une étape de retrait des premier et deuxième organes de montage après assemblage des premier et deuxième dispositifs de réception aux éléments de châssis correspondant.

Les étapes d'association des premier et deuxième dispositifs de réception peuvent être réalisées sur un même poste de travail de chaîne de production, et les organes de montage peuvent être retirés dès que les soudures associées ont été réalisées.

## Revendications

1. Agencement pour véhicule automobile comportant une partie avant de châssis munie de deux dispositifs de réception (1 ; 1a, 1b) identiques d'un élément de suspension d'un véhicule automobile, chacun monté à un élément de châssis (3) correspondant du véhicule, dans une zone de suspension avant associée du véhicule automobile, chaque dispositif de réception (1) étant formé en une pièce monolithique et comportant un système de positionnement (2) apte à monter le dispositif indifféremment dans 'une zone de suspension avant gauche, ou avant droite, dudit véhicule, le système de positionnement (2) comportant un premier élément d'accouplement (2a) destiné à coopérer, au cours du montage, avec un premier organe de montage (4a) lorsque le dispositif de réception est configuré de sorte à être disposé dans la zone de suspension avant droite et un deuxième élément d'accouplement (2b) destiné à coopérer, au cours du montage, avec un deuxième organe de montage (4b) lorsque le dispositif de réception est configuré de sorte à être disposé dans la zone de suspension avant gauche, **caractérisé en ce qu'**il comporte une partie d'assemblage (5a) munie d'un système d'assemblage destiné au montage de l'élément de suspension, et une partie d'accostage (5b) au niveau de laquelle est formé le système de positionnement (2), ladite partie d'accostage (5b) étant destinée à coopérer avec l'élément de châssis (3) correspondant, la partie d'accostage (5b) comportant une face située dans un plan différent et surélevé d'une face de la partie d'assemblage (5a).

2. Agencement selon la revendication précédente, **caractérisé en ce que** les premier et deuxième éléments d'accouplement (2a, 2b) sont formés chacun par un trou, de préférence débouchant.

3. Agencement selon l'une des revendications 1 ou 2, **caractérisé en ce que** le système d'assemblage comporte un trou principal (7) destiné à recevoir un axe de l'élément de suspension, et au moins un trou secondaire (8) allongé de sorte à permettre la fixation de l'élément de suspension tout en permettant un réglage angulaire du positionnement de l'élément de suspension autour de son axe.

4. Agencement selon l'une quelconque des revendications précédentes, **caractérisé en ce qu'**il présente un axe de symétrie sensiblement perpendiculaire à l'axe de longitudinal du véhicule une fois le dispositif de réception assemblé au reste du châssis (100) dudit véhicule.

5. Procédé de fabrication d'un agencement pour véhicule automobile comportant une partie avant de châssis munie de deux dispositifs de réception (1 ; 1a, 1b) identiques d'un élément de suspension d'un véhicule automobile, chacun monté à un élément de châssis (3) correspondant du véhicule, dans une zone de suspension avant associée du véhicule automobile, chaque dispositif de réception (1) étant formé en une pièce monolithique et comportant un système de positionnement (2) apte à monter le dispositif indifféremment dans 'une zone de suspension avant gauche, ou avant droite, dudit véhicule, le système de positionnement (2) comportant un premier élément d'accouplement (2a) destiné à coopérer, au cours du montage, avec un premier organe de montage (4a) lorsque le dispositif de réception est configuré de sorte à être disposé dans la zone de suspension avant droite et un deuxième élément d'accouplement (2b) destiné à coopérer, au cours du montage, avec un deuxième organe de montage (4b) lorsque le dispositif de réception est configuré de sorte à être disposé dans la zone de suspension avant gauche, l'agencement comportant une partie d'assemblage (5a) munie d'un système d'assemblage destiné au montage de l'élément de suspension, et une partie d'accostage (5b) au niveau de laquelle est formé le système de positionnement (2), ladite partie d'accostage (5b) étant destinée à coopérer avec l'élément de châssis (3) correspondant, la partie d'accostage (5b) comportant une face située dans un plan différent et surélevé d'une face de la partie d'assemblage (5a), **caractérisé en ce qu'**il comporte :
- une première étape d'association d'un premier dispositif (1a) de réception à un premier organe de montage (4a) dans une zone de suspension avant droite du véhicule,
- une deuxième étape d'association d'un deuxième dispositif (1b) de réception à un deuxième organe de montage (4b) dans une zone de suspension avant gauche du véhicule.

6. Procédé selon la revendication précédente, **caractérisé en ce que** le système de positionnement (2) de chacun des premier et deuxième dispositifs de réception (1a, 1b) comportant un premier trou (2a) et un deuxième trou (2b), de préférence débouchant, décalés le long d'un axe destiné à être sensiblement parallèle à l'axe longitudinal du véhicule, les première et deuxième étape d'association comportent respectivement la mise en place d'un doigt de montage du premier organe de montage (4a) au travers d'au moins une partie du premier trou (2a) et la mise en place d'un doigt de montage du deuxième organe de montage (4b) au travers d'au moins une partie du deuxième trou (2b).

7. Procédé selon l'une quelconque des revendications 5 ou 6, **caractérisé en ce qu'**il comporte une étape de mise en contact d'un premier élément de châssis avec le premier dispositif de réception (1a) et/ou une étape de mise en contact d'un deuxième élément de châssis avec le deuxième dispositif de réception (1b), **et en ce qu'**il comporte une étape de soudure du premier élément de châssis au premier dispositif de réception (1a) et/ou du deuxième élément de châssis au deuxième dispositif de réception (1b).

8. Procédé selon la revendications précédente, **caractérisé en ce que**, pour chacun des premier et deuxième dispositifs de réception (1a, 1b), l'étape de soudure comporte une étape de positionnement d'une partie de pince (11a) de soudure correspondante entre l'organe de montage associé et une zone de contact (Z1) entre le dispositif de réception associé et l'élément de châssis associé.

9. Procédé selon l'une des revendications 5 à 8, **caractérisé en ce qu'**il comporte une étape de retrait des premier et deuxième organes de montage (4a, 4b) après assemblage des premier et deuxième dispositifs de réception (1a, 1b) aux éléments de châssis correspondants.

## Patentansprüche

1. Anordnung für ein Kraftfahrzeug, das einen vorderen Fahrwerkteil umfasst, der mit zwei gleichen Vorrichtungen (1; 1a, 1b) für die Aufnahme eines Aufhängungselements des Kraftfahrzeugs versehen ist, wovon jedes an einem entsprechenden Fahrwerkelement (3) des Fahrzeugs in einer vorderen Aufhängungszone, die dem Kraftfahrzeug zugeordnet ist, montiert ist, wobei die Aufnahmevorrichtung (1) aus einem einzigen Teil gebildet ist und ein Positionierungssystem (2) umfasst, mit dem die Vorrichtung gleichermaßen in einer vorderen linken oder vorderen rechten Aufhängungszone des Fahrzeugs montiert werden kann, wobei das Positionierungssystem (2) ein erstes Kopplungselement (2a) umfasst, das dazu bestimmt ist, während der Montage mit einem ersten Montageorgan (4a) zusammenzuwirken, wenn die Aufnahmevorrichtung in der Weise konfiguriert ist, dass sie in der vorderen rechten Aufhängungszone anzuordnen ist, und ein zweites Kopplungselement (2b) umfasst, das dazu bestimmt ist, während der Montage mit einem zweiten Montageorgan (4b) zusammenzuwirken, wenn die Aufnahmevorrichtung in der Weise konfiguriert ist, dass sie in der vorderen linken Aufhängungszone anzuordnen ist, **dadurch gekennzeichnet, dass** sie ein Zusammenfügungsteil (5a), das mit einem für die Montage des Aufhängungselements bestimmten Zusammenfügungssystem versehen ist und ein Ankopplungsteil (5b), auf dessen Höhe das Positionierungssystem (2) gebildet ist, umfasst, wobei der Ankopplungsteil (5b) dazu bestimmt ist, mit dem entsprechenden Fahrwerkelement (3) zusammenzuwirken, wobei der Ankopplungsteil (5b) eine Fläche aufweist, die sich in einer Ebene befindet, die von einer Fläche des Zusammenfügungsteils (5a) verschieden ist und sich über dieser befindet.

2. Anordnung nach dem vorhergehenden Anspruch, **dadurch gekennzeichnet, dass** das erste und das zweite Kopplungselement (2a, 2b) jeweils durch ein Loch, vorzugsweise ein Durchgangsloch, gebildet sind.

3. Anordnung nach einem der Ansprüche 1 oder 2, **dadurch gekennzeichnet, dass** das Zusammenfügungssystem ein Hauptloch (7), das dazu bestimmt ist, eine Achse des Aufhängungselements aufzunehmen, und wenigstens ein Nebenloch (8), das langgestreckt ist, so dass es die Befestigung des Aufhängungselements ermöglicht und dabei eine Winkelregulierung der Positionierung des Aufhängungselements um seine Achse ermöglicht, umfasst.

4. Anordnung nach einem der vorhergehenden Ansprüche, **dadurch gekennzeichnet, dass** sie eine Symmetrieachse besitzt, die zu der Längsachse des Fahrzeugs im Wesentlichen senkrecht ist, sobald die Aufnahmevorrichtung mit dem übrigen Fahrwerk (100) des Fahrzeugs zusammengefügt worden ist.

5. Verfahren zum Herstellen einer Anordnung für ein Kraftfahrzeug, das einen vorderen Fahrwerkteil umfasst, der mit zwei gleichen Vorrichtungen (1; 1a, 1b) für die Aufnahme eines Aufhängungselements eines Kraftfahrzeugs versehen ist, wovon jedes an einem entsprechenden Fahrwerkelement (3) des Fahrzeugs in einer vorderen Aufhängungszone, die dem Kraftfahrzeug zugeordnet ist, montiert ist, wobei jede Aufnahmevorrichtung (1) einteilig ausgebildet ist und ein Positionierungssystem (2) enthält, mit dem die Vorrichtung gleichermaßen in einer vorderen linken oder vorderen rechten Aufhängungszone des Fahrzeugs montiert werden kann, wobei das Positionierungssystem (2) ein erstes Kopplungselement (2a) umfasst, das dazu bestimmt ist, während der Montage mit einem ersten Montageorgan (4a) zusammenzuwirken, wenn die Aufnahmevorrichtung in der Weise konfiguriert ist, dass sie in der vorderen rechten Aufhängungszone anzuordnen ist, und ein zweites Kopplungselement (2b) umfasst, das dazu bestimmt ist, während der Montage mit einem zweiten Montageorgan (4b) zusammenzuwirken, wenn die Aufnahmevorrichtung in der Weise konfiguriert ist, dass sie in der vorderen linken Aufhängungszone anzuordnen ist, wobei die Anordnung ein Zusammenfügungsteil (5a), das mit einem für die Montage des Aufhängungselements bestimmten Zusammenfügungssystem versehen ist, und ein Ankopplungsteil (5b), auf dessen Höhe das Positionierungssystem (2) gebildet ist, umfasst, wobei das Ankopplungsteil (5b) dazu bestimmt ist, mit dem entsprechenden Fahrwerkelement (3) zusammenzuwirken, wobei das Ankopplungsteil (5b) eine Fläche aufweist, die sich in einer Ebene befindet, die von einer Fläche des Zusammenfügungsteils (5a) verschieden ist und sich über dieser befindet, **dadurch gekennzeichnet, dass** es Folgendes umfasst:
- einen ersten Schritt des Zuordnens einer ersten Aufnahmevorrichtung (1a) zu einem ersten Montageorgan (4a) in einer vorderen rechten Aufhängungszone des Fahrzeugs, und
- einen zweiten Schritt des Zuordnens einer zweiten Aufnahmevorrichtung (1b) zu einem zweiten Montageorgan (4b) in einer vorderen linken Aufhängungszone des Fahrzeugs.

6. Verfahren nach dem vorhergehenden Anspruch, **dadurch gekennzeichnet, dass** das Positionierungssystem (2) sowohl der ersten als auch der zweiten Aufnahmevorrichtung (1a, 1b) ein erstes Loch (2a) und ein zweites Loch (2b), die vorzugsweise Durchgangslöcher sind und längs einer Achse, die dazu bestimmt ist, zu der Längsachse des Fahrzeugs im Wesentlichen parallel zu sein, versetzt sind, umfasst, wobei der erste und der zweite Zuordnungsschritt das Anordnen eines Montagezapfens des ersten Montageorgans (4a) wenigstens in einem Teil des ersten Lochs (2a) bzw. das Anordnen eines Montagezapfens des zweiten Montageorgans (4b) wenigstens in einem Teil des zweiten Lochs (2b) umfassen.

7. Verfahren nach einem der Ansprüche 5 oder 6, **dadurch gekennzeichnet, dass** es einen Schritt des Herstellens eines Kontakts zwischen einem ersten Fahrwerkelement und der ersten Aufnahmevorrichtung (1a) und/oder einen Schritt des Herstellens eines Kontakts zwischen einem zweiten Fahrwerkelement und der zweiten Aufnahmevorrichtung (1b) umfasst und dass es einen Schritt des Verschweißens des ersten Fahrwerkelements mit der ersten Aufnahmevorrichtung (1a) und/oder des zweiten Fahrwerkelements mit der zweiten Aufnahmevorrichtung (1b) umfasst.

8. Verfahren nach dem vorhergehenden Anspruch, **dadurch gekennzeichnet, dass** sowohl für die erste als auch für die zweite Aufnahmevorrichtung (1a, 1b) der Schweißschritt einen Schritt des Positionierens eines entsprechenden Schweißklemmteils (11a) zwischen dem zugeordneten Montageorgan und einer Kontaktzone (Z1) zwischen der zugeordneten Aufnahmevorrichtung und dem zugeordneten Fahrwerkelement umfasst.

9. Verfahren nach einem der Ansprüche 5 bis 8, **dadurch gekennzeichnet, dass** es einen Schritt des Herausziehens des ersten und des zweiten Montageorgans (4a, 4b) nach der Zusammenfügung der ersten und der zweiten Aufnahmevorrichtung (1a, 1b) mit den entsprechenden Fahrwerkelementen umfasst.

## Claims

1. Arrangement for a motor vehicle comprising a front chassis part provided with two identical devices (1; 1a, 1b) for receiving a suspension element of a motor vehicle, each mounted on a corresponding chassis element (3) of the vehicle in an associated front suspension region of the motor vehicle, each receiving device (1) being formed as a monolithic part and comprising a positioning system (2) able to mount the device equally well in a front left or front right suspension region of the said vehicle, the positioning system (2) comprising a first coupling element (2a) intended to cooperate, during mounting, with a first mounting member (4a) when the receiving device is configured so as to be located in the front right suspension region, and a second coupling element (2b) intended to cooperate, during mounting, with a second mounting member (4b) when the receiving device is configured so as to be located in the front left suspension region, **characterized in that** it comprises an assembly part (5a) provided with an assembly system intended for mounting the suspension element, and a docking part (5b) in which the positioning system (2) is formed, the said docking part (5b) being intended to cooperate with the corresponding chassis element (3), the docking part (5b) comprising a face situated in a plane which is different from and raised with respect to a face of the assembly part (5a).

2. Arrangement according to the preceding claim, **characterized in that** the first and second coupling elements (2a, 2b) are each formed by a hole, preferably a through-hole.

3. Arrangement according to either of Claims 1 and 2, **characterized in that** the assembly system comprises a main hole (7) intended to receive an axis of the suspension element, and at least one elongate secondary hole (8) so as to allow the fastening of the suspension element while allowing an angular adjustment of the positioning of the suspension element about its axis.

4. Arrangement according to any one of the preceding claims, **characterized in that** it has an axis of symmetry substantially perpendicular to the longitudinal axis of the vehicle once the receiving device has been assembled on the remainder of the chassis (100) of the said vehicle.

5. Method of manufacturing an arrangement for a motor vehicle comprising a front chassis part provided with two identical devices (1; 1a, 1b) for receiving a suspension element of a motor vehicle, each mounted on a corresponding chassis element (3) of the vehicle in an associated front suspension region of the motor vehicle, each receiving device (1) being formed as a monolithic part and comprising a positioning system (2) able to mount the device equally well in a front left or front right suspension region of the said vehicle, the positioning system (2) comprising a first coupling element (2a) intended to cooperate, during mounting, with a first mounting member (4a) when the receiving device is configured so as to be located in the front right suspension region, and a second coupling element (2b) intended to cooperate, during mounting, with a second mounting member (4b) when the receiving device is configured so as to be located in the front left suspension region, the arrangement comprising an assembly part (5a) provided with an assembly system intended for mounting the suspension element, and a docking part (5b) in which the positioning system (2) is formed, the said docking part (5b) being intended to cooperate with the corresponding chassis element (3), the docking part (5b) comprising a face situated in a plane which is different from and raised with respect to a face of the assembly part (5a), **characterized in that** it comprises:
- a first step of connecting a first receiving device (1a) to a first mounting member (4a) in a front right suspension region of the vehicle,
- a second step of connecting a second receiving device (1b) to a second mounting member (4b) in a front left suspension region of the vehicle.

6. Method according to the preceding claim, **characterized in that**, with the positioning system (2) for each of the first and second receiving devices (1a, 1b) comprising a first hole (2a) and a second hole (2b), preferably through-holes, offset along an axis intended to be substantially parallel to the longitudinal axis of the vehicle, the first and second connection steps respectively comprise the placing of a mounting finger of the first mounting member (4a) through at least a part of the first hole (2a) and the placing of a mounting finger of the second mounting member (4b) through at least a part of the second hole (2b).

7. Method according to either one of Claims 5 and 6, **characterized in that** it comprises a step of bringing a first chassis element into contact with the first receiving device (1a) and/or a step of bringing a second chassis element into contact with the second receiving device (1b), **and in that** it comprises a step of welding the first chassis element to the first receiving device (1a) and/or the second chassis element to the second receiving device (1b).

8. Method according to the preceding claim, **characterized in that**, for each of the first and second receiving devices (1a, 1b), the welding step comprises a step of positioning a corresponding welding tongs part (11a) between the associated mounting member and a region of contact (Z1) between the associated receiving device and the associated chassis element.

9. Method according to one of Claims 5 to 8, **characterized in that** it comprises a step of removing the first and second mounting members (4a, 4b) after assembly of the first and second receiving devices (1a, 1b) on the corresponding chassis elements.
